(19) **Europäisches Patentamt**
**European Patent Office**
**Office européen des brevets**

(11) **EP 4 083 745 B1**

(12) ## EUROPEAN PATENT SPECIFICATION

(45) Date of publication and mention
of the grant of the patent:
**05.06.2024 Bulletin 2024/23**

(21) Application number: **22168531.6**

(22) Date of filing: **14.04.2022**

(51) International Patent Classification (IPC):
**G05F 1/565** $^{(2006.01)}$   **G05F 1/575** $^{(2006.01)}$

(52) Cooperative Patent Classification (CPC):
**G05F 1/575; G05F 1/565**

(54) **ACTIVE COMPENSATION CIRCUIT FOR A SEMICONDUCTOR REGULATOR**

AKTIVE KOMPENSATIONSSCHALTUNG FÜR EINEN HALBLEITERREGLER

CIRCUIT DE COMPENSATION ACTIVE POUR UN RÉGULATEUR À SEMI-CONDUCTEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.04.2021 US 202117242067**

(43) Date of publication of application:
**02.11.2022 Bulletin 2022/44**

(73) Proprietor: **STMicroelectronics International N.V.**
**1228 Plan-les-Ouates, Geneva (CH)**

(72) Inventors:
• **SHASHWAT**
**201010 Kaushambi (IN)**
• **NARWAL, Rajesh**
**201301 Greater Noida (IN)**

(74) Representative: **Bosotti, Luciano**
**Buzzi, Notaro & Antonielli d'Oulx S.p.A.**
**Corso Vittorio Emanuele II, 6**
**10123 Torino (IT)**

(56) References cited:
WO-A1-02/054167       US-A1- 2006 012 356
US-A1- 2012 038 332   US-A1- 2013 002 216
US-A1- 2021 034 087

**Description**

BACKGROUND

Technical Field

This application is directed to an active compensation circuit for a regulator and, in particular, an active compensation circuit that presents an equivalent capacitance and an equivalent resistance to the regulator.

Description of the Related Art

An analog voltage regulator is used to regulate an output voltage supplied to a load. In particular, a voltage regulator provides an output voltage within a specified range while maintaining current supply requirements. In many applications, there is a demand to supply a wide range of load currents. Supplying a wide range of load currents makes stabilizing a system challenging particularly when operating within integrated circuit area constraints.

Document WO 02/054167 A1 discloses a voltage regulator having an output terminal designed to be connected to a load, comprising an operational amplifier whereof the non-inverting input is connected to a reference potential, and the inverting input is connected to the operational amplifier output, a capacitive impedance connected between the inverting amplifier input and output, a power switch controlled by the inverting amplifier output, arranged so as to connect the output terminal to a first supply potential, said capacitive impedance comprising a portion capable of being shorted associated with active shorting means when the current flowing through the load is higher that a predetermined current.

Document US 2013/002216 A1 discloses a power supply module and a power supply method corresponding to an electronic device. The power supply module includes a low-dropout (LDO) voltage regulator to adjust an input signal received from a battery and output a stabilized output signal, and an external load calculation circuit to calculate an external load value at a power output node of the LDO voltage regulator and stabilize the output signal based on the external load value.

Document US 2021/034087 A1 discloses a low drop-out (LDO) voltage regulator circuit includes a power transistor having a control terminal configured to receive a control signal and an output terminal coupled to an output node. A current regulation loop senses current flowing through the power transistor and modulates the control signal to cause the power transistor to output a constant current to the output node. A voltage regulation loop senses voltage at the output node and modulates the control signal to cause the power transistor to deliver current to the output node so that an output voltage at the output node is regulated. The current regulation loop includes a bipolar transistor connected to the control terminal of the power transistor, where a base terminal of the bipolar transistor is driven by a signal dependent on a difference between the sensed current flowing through the power transistor and a reference.

Document US 2006/012356 A1 discloses a voltage regulator including a first and second amplifier stage, an output stage, and a variable zero circuit. The first amplifier stage is coupled to receive a reference voltage and introduces a first pole of the voltage regulator. The second amplifier stage is coupled to the first amplifier stage and introduces a second pole of the voltage regulator. The output stage is coupled to the second amplifier stage, has an output driver, and is coupled to provide an output voltage based on the reference voltage. The variable zero circuit is coupled to the first amplifier stage, the second amplifier stage, and the output stage. The variable zero circuit provides a zero to compensate for at least one of the first pole or the second pole of the voltage regulator based on a gate to source voltage of the output driver and a drain to source voltage of the output driver.

Document US 2012/038332 A1 discloses a linear regulator and a current sensing circuit. The linear regulator comprises a pass transistor, a compensation capacitor, a variable resistor, an error amplifier and a current sensing circuit comprising a sense transistor controlled by the error amplifier and a voltage follower coupled with the second terminal of the pass transistor and the second terminal of the sense transistor. The sense transistor receives an input voltage, and generates a sense current proportional to a pass current. The voltage follower controls the voltage at the second terminal of the sense transistor to be the same as that at the second terminal of the pass transistor, and adjusts the resistance of the variable resistor according to the voltages at the second terminal of the pass transistor, the voltage at the second terminal of the sense transistor, and the sense current flowing through the sense transistor.

BRIEF SUMMARY

The invention is defined by a semiconductor regulator in accordance with claim 1. Further preferred embodiments are defined in the dependent claims.

An active compensation circuit for a regulator is provided.

The active compensation circuit presents a resistance-capacitance (RC) filter for compensating the regulator. The RC filter includes an equivalent capacitance and an equivalent resistance that are serially coupled. The active compensation circuit reduces integrated circuit area resources by enhancing and increasing a value of the equivalent capacitance using feedback. The active compensation circuit presents an equivalent resistance using transistors in saturation and controls the equivalent resistance using an internal compensation current.

The active compensation circuit mirrors a current flowing through a power transistor of the regulator to generate a sensed current. The active compensation circuit aggregates the sensed current and a fixed or static internal current to generate the compensation current. The active compensation circuit uses the compensation current to present the equivalent capacitance and the equivalent resistance for controlling the regulator.

BRIEF DESCRIPTION OF THE SEVERAL VIEWS OF THE DRAWINGS

Figure 1 shows a circuit schematic of a regulator.
Figure 2 shows a circuit schematic of a regulator having a compensation circuit.
Figure 3 shows a circuit schematic of a regulator having a compensation circuit.
Figure 4 shows a circuit schematic of a regulator having an active compensation circuit.
Figure 5A shows a Bode plot for the regulator having the active compensation circuit.
Figure 5B shows magnitude and phase plots surrounding the unitary gain band of 0 decibels (dB) for the load currents of zero, 0.025, 0.05, 0.075, 0.1 and 0.125A.
Figure 6 shows a relationship between the maximum phase boost frequency and the unitary gain band.

DETAILED DESCRIPTION

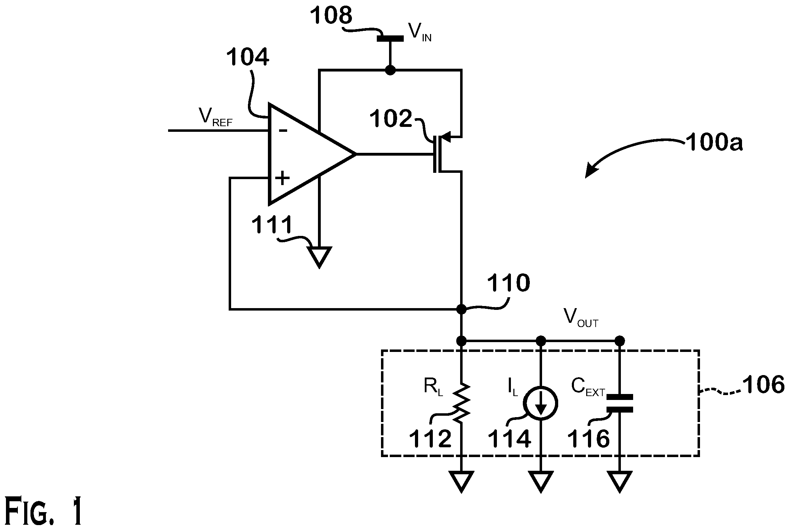

Figure 1 shows a circuit schematic of regulator 100a. The regulator 100a employs transistor regulation. The regulator 100a includes a power transistor 102, which is also referred to as a pass transistor. The regulator 100a includes an operational amplifier 104 for driving the power transistor 102. During operation, the regulator 100a provides an output voltage ($V_{OUT}$) to a load 106. The load 106 may be external to the regulator 100a, and, accordingly, the load 106 may be not part of the regulator 100a.

The power transistor 102 has a control terminal, a first conduction terminal and a second conduction terminal. The first conduction terminal is coupled to an input node 108 configured to supply an input voltage ($V_{IN}$) to the regulator 100a. The second conduction terminal is coupled to an output node 110 over which the output voltage ($V_{OUT}$) is provided. During operation, the load 106 is coupled to the output node 110. The load 106 receives the output voltage ($V_{OUT}$) over the output node 110.

The operational amplifier 104 has a first input, a second input and an output. The operational amplifier 104 receives a reference voltage ($V_{REF}$) over the first input. The reference voltage ($V_{REF}$) may be a sought or desired value for the output voltage ($V_{OUT}$). For example, the reference voltage ($V_{REF}$) may represent a voltage level (scaled or unscaled) sought to be output by the regulator 100a. The second input of the operational amplifier 104 is coupled to the output node 110. The operational amplifier 104 receives the output voltage ($V_{OUT}$) over the second input. Alternatively, the operational amplifier 104 may receive a voltage representative of the output voltage ($V_{OUT}$). The received voltage may be the output voltage ($V_{OUT}$) having undergone voltage division, for example, by a resistive voltage divider.

The operational amplifier 104 has a first supply input and a second supply input. The first supply input is coupled to the input node 108. The operational amplifier 104 is configured to receive the input voltage ($V_{IN}$) over the first supply input. The second supply input is coupled to ground 111 to provide the operational amplifier 104 with a reference voltage.

The output of the operational amplifier 104 is coupled to the control terminal of the power transistor 102. The operational amplifier 104 compares the output voltage ($V_{OUT}$) and the reference voltage ($V_{REF}$) and generates a control signal for driving the power transistor 102 based on the comparison. For example, if the output voltage ($V_{OUT}$) is less than the reference voltage ($V_{REF}$), the operational amplifier 104 sets the control signal to the active state (e.g., logical one). Accordingly, the power transistor 102 operates in the conductive state to increase the output voltage ($V_{OUT}$) provided to the load 106. The load 106 is represented in Figure 1 as a load resistance ($R_L$) 112, a current source 114 that sinks a load current ($I_L$) and an external capacitance ($C_{EXT}$) 116.

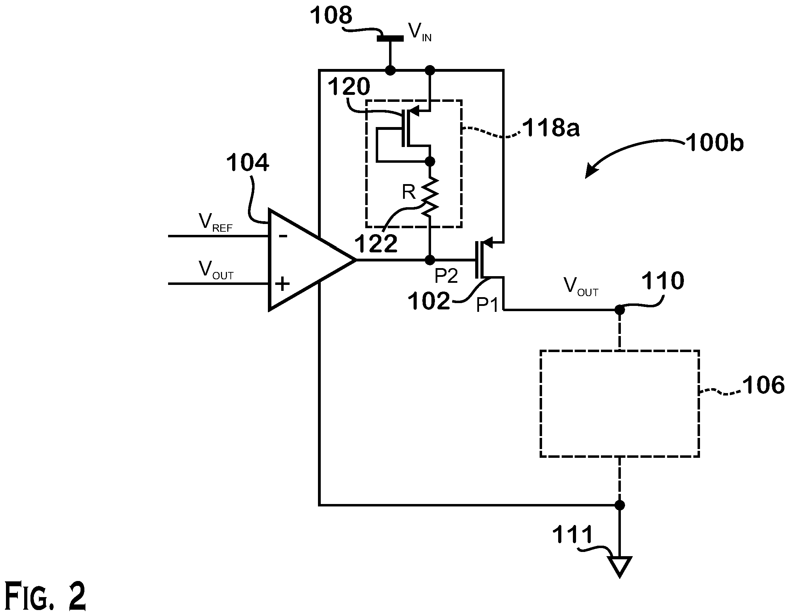

Figure 2 shows a circuit schematic of regulator 100b having a compensation circuit 118a. The compensation circuit 118a is coupled between the input node 108 and the control terminal of the power transistor 102. In particular, the compensation circuit 118a includes a compensation transistor 120 and a compensation resistance (R) 122. The compensation transistor 120 has a first conduction terminal coupled to the input node 108. The compensation transistor 120 has a second conduction terminal and a control terminal that are coupled to each other. The compensation resistance 122 has a first terminal coupled to the second conduction terminal and the control terminal of the compensation transistor 120. The compensation resistance 122 has a second terminal coupled to the control terminal of the power transistor 102.

The compensation transistor 120 provides a voltage-controlled resistance. As the load current ($I_L$) increases, the voltage at the control terminal of the power transistor 102 will decrease. Consequently, the gate-source voltage (vgs) between the control terminal and the second conduction terminal of the compensation transistor 120 and the transconductance ($g_m$) of the compensation transistor 120 increase. The equivalent resistance of the compensation circuit 118a is the sum of the compensation resistance (R) 122 and the resistance ($1/g_m$) the compensation transistor 120. The equivalent resistance, $R+1/g_m$, decreases as the load current ($I_L$) increases. Further, the loop gain decreases and a first pole (denoted 'P1') representing the load 106 at the output of the regulator 100b shifts rightward to higher frequency. Correspondingly, a second pole (denoted 'P2') associated with the compensation circuit 118a also shifts to track the first pole (P1). However, lowering the loop gain degrades the load regulation provided by the regulator 100b.

To compensate for the second pole (P2), a resistance-capacitance (RC) filter may be used. The RC filter introduces a zero (denoted 'Z1') that offsets the second pole (P2).

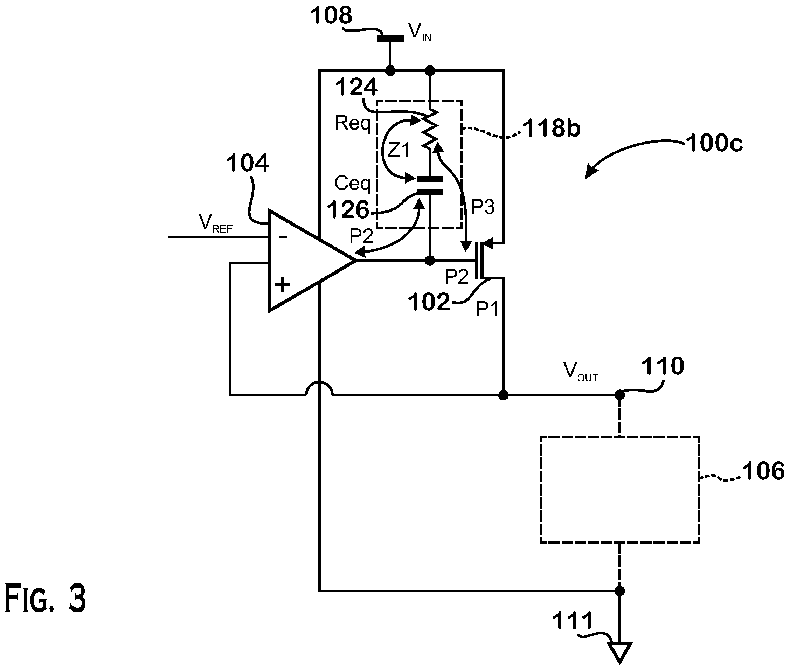

Figure 3 shows a circuit schematic of regulator 100c having a compensation circuit 118b. The compensation circuit 118b is coupled between the input node 108 and the control terminal of the power transistor 102. The compensation circuit 118b includes a compensation resistance (Req) 124 and a compensation capacitance (Ceq) 126. The compensation resistance 124 has a first terminal coupled to the input node 108 and a second terminal. The compensation capacitance 126 has a first side coupled to the second terminal of the compensation resistance 124. The compensation capacitance 126 has a second side coupled to the control terminal of the power transistor 102.

The compensation circuit 118b introduces the zero (Z1) to offset the second pole (P2). The compensation circuit 118b also introduces a third pole (denoted 'P3'). In particular, the first pole (P1) is represented as:

$$P_1 = \frac{1}{Cext(R_o||RL)} \qquad \text{Equation (1),}$$

where $R_o$ is the output resistance of the power transistor 102 and $\|$ represents a parallel resistance.

The second pole (P2) is represented as:

$$P_2 = \frac{1}{\left((C_g + Ceq)R_{oamp}\right) + Ceq * Req)} \qquad \text{Equation (2),}$$

where $C_g$ is the capacitance associated with the power transistor 102 and $R_{oamp}$ is the output resistance of the operational amplifier 104.

The first zero (Z1) is represented as:

$$Z_1 = \frac{1}{Ceq * Req} \qquad \text{Equation (3).}$$

The third pole (P3) is represented as:

$$P_3 = \frac{1}{Req}\left(\frac{1}{Ceq} + \frac{1}{C_g}\right) \qquad \text{Equation (4).}$$

To achieve a desired phase margin, it is sought that the unity gain bandwidth (UGB) is less than the third pole (P3) and greater than both the second pole (P2) and the first zero (Z1). Accordingly, with a varying load current ($I_L$), a pole-zero doublet of the third pole (P3) and the first zero (Z1) is moved to maintain the criterion of the unity gain bandwidth between the third pole (P3) and the first zero (Z1). Per Equations 3 and 4, both the third pole (P3) and the first zero (Z1) are a function of the compensation resistance (Req) 124.

Achieving the unity gain bandwidth criterion calls for the compensation capacitance (Ceq) 126 to be greater than five times the capacitance ($C_g$) associated with the power transistor 102. For example, if the capacitance ($C_g$) associated with the power transistor 102 is 4 to 7 picofarad (pF), then the compensation capacitance (Ceq) 126 is at least 20 to 40pF. In addition, the output resistance ($R_{oamp}$) of the operational amplifier 104 is sought to be greater (or considerably greater) than the compensation resistance (Req) 124.

An active RC compensation circuit 118 or 128 is used to enhance the compensation capacitance (Ceq). The active RC compensation circuit has a smaller footprint than a conventional passive compensation circuit and occupies a smaller implementation space in an integrated circuit to implement the compensation capacitance (Ceq). The integrated circuit of the disclosed active compensation circuit 118 or 128 can be formed from any acceptable semiconductor substrate which might include silicon, gallium arsenide or other acceptable semiconductor material used for integrated circuit. In one embodiment, the active RC compensation circuit will be in the same semiconductor substrate and part of the same integrated circuit as the power transistor 102 having the control terminal to which it is coupled. In other embodiments, the active compensation circuit 118 or 128 will be in a separate integrated circuit and on a separate substrate from the power transistor 102. Accordingly, in one embodiment, the operational amplifier is on the same semiconductor substrate at the power transistor, while in other embodiments, they are on different substrates. In one embodiment, the operational amplifier, the variable value capacitance, the variable value equivalent resistance and the power transistor are all on the same semiconductor substrate, while in other embodiments, the power transistor is on its own substrate and the operational amplifier, the variable value capacitance and the variable value equivalent resistance are on the same substrate with each other, positioned closely to the substrate holding the power transistor.

The active RC compensation circuit 118, 128 enhances the compensation capacitance using feedback and results in a higher equivalent active capacitance. In the active RC compensation circuit, an equivalent active resistance is implemented using transistors in saturation, where control of a bias current results in control of the equivalent active resistance.

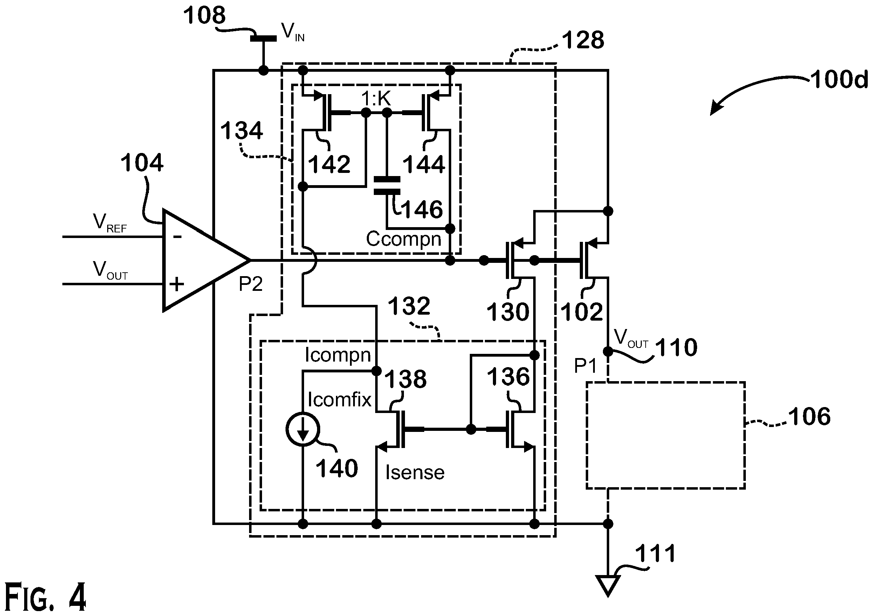

Figure 4 shows a circuit schematic of regulator 100d having an active compensation circuit 128. The active compensation circuit 128 includes a mirror transistor 130, a first compensation stage 132 and a second compensation stage 134. The first compensation stage 132 includes first and second compensation transistors 136, 138 and a compensation current source 140. The second compensation stage 134 includes third and fourth compensation transistors 142, 144 and a compensation capacitance (Ccompn) 146.

The mirror transistor 130 has a first conduction terminal coupled to the first conduction terminal of the power transistor 102 and a control terminal coupled to the control terminal of the power transistor 102. The mirror transistor 130 has a second conduction terminal.

In the first compensation stage 132, the first compensation transistor 136 has a first conduction terminal and a control terminal that are both coupled to the second conduction terminal of the mirror transistor 130. The first compensation transistor 136 has a second conduction terminal coupled to ground 111. It is noted that although ground is described herein as a reference voltage, any reference voltage source may be used.

The second compensation transistor 138 has a control terminal coupled to the control terminal of the first compensation transistor 136. The second compensation transistor 138 has a first conduction terminal. The second compensation transistor 138 has a second conduction terminal coupled to ground 111. The compensation current source 140 has an anode coupled to the first conduction terminal of the second compensation transistor 138. The compensation current source 140 has a cathode coupled to ground 111.

In the second compensation stage 134, the third compensation transistor 142 has a first conduction terminal coupled to the input node 108 and a second conduction terminal and a control terminal that are both coupled to the first conduction terminal of the second compensation transistor 138.

The fourth compensation transistor 144 has a first conduction terminal coupled to the input node 108, a second conduction terminal coupled to the control terminal of the power transistor 102 and a control terminal coupled to the control terminal of the third compensation transistor 142. The compensation capacitance 146 has a first side coupled to the control terminal of the fourth compensation transistor 144 and a second side coupled to the second conduction terminal of the fourth compensation transistor 144.

During operation, the load 106 is coupled to the output node and the power transistor 102 outputs the output voltage ($V_{OUT}$) at the output node 110. The load 106 draws or sinks the load current ($I_L$). The load current ($I_L$) flows through the power transistor 102 to the load 106. The mirror transistor 130 mirrors the current flowing through the power transistor 102.

Due to the coupling of the mirror transistor 130 and the first compensation transistor 136, the same current passes passing through the mirror transistor 130 also passes through the first compensation transistor 136 in the first compensation stage 132. Sensing the current passing through the mirror transistor 130 is tantamount to sensing the overvoltage (Vov) of the power transistor 102. The first compensation stage 132 copies the current passing through the first compensation transistor 136 to the second compensation transistor 138, whereby the current passing through the second compensation transistor 138 is the sensed current (Isense).

The compensation current source 140 generates a current (Icomfix). The generated current (Icomfix) is additively combined with the sensed current (Isense) to produce a compensation current (Icompn). The compensation current (Icompn) passes through the third compensation transistor 142. The third and fourth compensation transistors 142, 144 has a current mirror ratio of K, where the transconductance of the fourth compensation transistor 144 ($g_4$) is K times the transconductance of the third compensation transistor 142 ($g_3$) ($g_4 = Kg_3$). The current mirror arrangement of the third and fourth compensation transistors 142, 144 results in the current flowing through the fourth compensation transistor 144 compensating the regulator 100d.

The output resistance of the third and fourth compensation transistors 142, 144 is considerably large. The equivalent capacitance (Ceq) of the active compensation circuit 128 is:

$$Ceq = \left(1 + \frac{g_4}{g_3}\right) * Ccompn = (1 + K) * Ccompn \qquad \text{Equation (5)}.$$

Further, the equivalent resistance (Req) of the active compensation circuit 128 is:

$$Req = \frac{1}{g_3\left(1 + \frac{g_4}{g_3}\right)} = \frac{1}{g_3(1+K)} \qquad \text{Equation (6)}.$$

Per Equation (5), the active compensation circuit 128, as an active block, produces an equivalent capacitance (Ceq) that is a multiple of compensation capacitance (Ccompn) 146. The equivalent capacitance (Ceq) is a 1 + K multiple of compensation capacitance (Ccompn) 146. Increasing the current mirror ratio between of the fourth compensation transistor 144 and the third compensation transistor 142 increases the capacitive multiplicative effect of the active compensation circuit 128. Space saving on a circuit is achieved by the capacitive multiplicative effect due to the fact that a smaller compensation capacitance (Ccompn) 146 is multiplied by a factor that is greater than one to obtain the equivalent capacitance (Ceq). The equivalent capacitance (Ceq) is therefore a variable capacitance based on the multiplier 1+K. The equivalent capacitance (Ceq) will therefore become greater without increasing the size the space being used on the integrated circuit substrate in which the compensation circuit is formed.

Per Equation (6), the equivalent resistance (Req) is negatively correlated with the factor 1 + K and with the transconductance of the third compensation transistor 142 ($g_3$). The transconductance of the third compensation transistor 142 ($g_3$) is proportional to the square root of the compensation current (Icompn) (e.g., $g_3 \alpha \sqrt{Icompn}$ ). The active compensation circuit 128 modulates the compensation current (Icompn) to control the equivalent resistance (Req).

The equivalent resistance (Req) is therefore a variable resistance. The multiplier 1+K is the same multiplier that used for the equivalent capacitance (Ceq) and may be fixed for a particular circuit in saturation because the ratio for the fourth compensation transistor 144 and the third compensation transistor 142 may be fixed. The equivalent resistance (Req) may be changed by changing the transconductance of the third compensation transistor 142, the compensation current (Icompn) or size of the third compensation transistor 142. The variability of the equivalent resistance (Req) can become greater (or smaller) without increasing (or decreasing) the size the space being used on the integrated circuit substrate in which the compensation circuit is formed.

The active compensation circuit 128 reduces the impedance at the input of the power transistor 102 for higher frequencies without degrading the loop gain. The second pole ($P_2$) will be compensated by introducing a zero ($Z_1$), which makes the third pole ($P_3$) as an equivalent second pole. Furthermore, the equivalent second pole ($P_3$) tracks a movement of the first pole ($P_1$). As described herein, the active compensation circuit 128 uses load current sensing to modulate the location of pole-zero doublet such that it tracks the dominant pole ($P_1$) at the output of the power transistor 102. In particular, the active compensation circuit 128 modulates the location of pole-zero doublet such that the unitary gain band (UGB) satisfies:

$$P_1 < P_2 < UGB \approx Z_1 < P_3 \qquad \text{Equation (7)}.$$

During operation, the transistors 136, 138, 142, 144 are operated in saturation and used to obtain a small signal resistance (1/$g_m$).

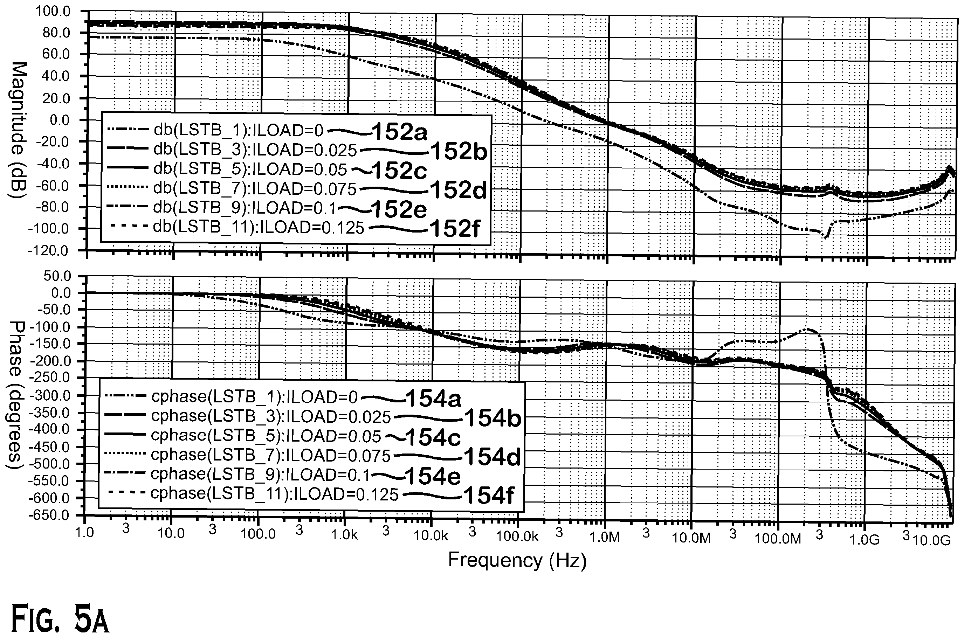

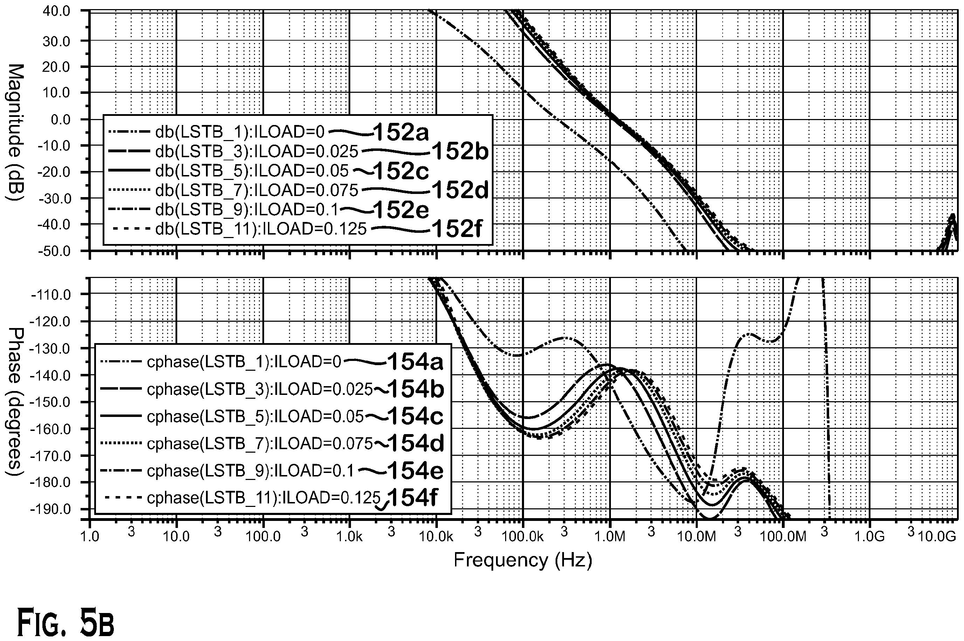

Figure 5A shows a Bode plot for the regulator 100d having the compensation circuit 128. The Bode plot shows respective magnitude 152a-f and phase 154a-f plots for load currents of zero, 0.025, 0.05, 0.075, 0.1 and 0.125A. Figure 5B shows magnitude 152a-f and phase 154a-f plots surrounding the unitary gain band of 0 decibels (dB) for the load currents of zero, 0.025, 0.05, 0.075, 0.1 and 0.125A. As seen in Figures 5A and 5B, a phase boost peak changes in relation to the load current. The regulator 100d provides a phase boost in a proximity of the unitary gain band.

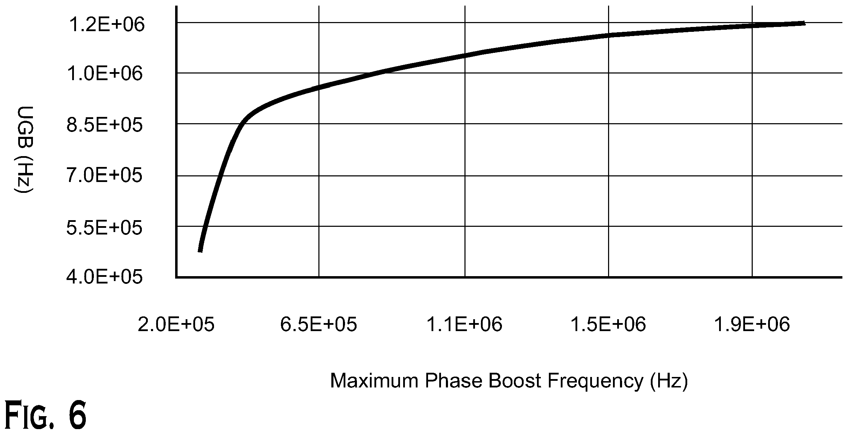

Figure 6 shows a relationship between the maximum phase boost frequency and the unitary gain band. As can be seen in Figure 6, as the frequency of the maximum phase boost increases so does the unitary gain band. Further, in a region of linearity surrounding 1.1 megahertz (MHz), the maximum phase boost frequency coincides with the unitary gain band.

The various embodiments described above can be combined to provide further embodiments. The invention is defined by the appended claims.

**Claims**

1. A semiconductor regulator (100d), comprising:

   an input node ($V_{IN}$);
   an output node ($V_{OUT}$);
   a power transistor (102) having a first conduction terminal coupled to the input node ($V_{IN}$), a second conduction terminal coupled to the output node ($V_{OUT}$) and a control terminal, the power transistor (102) being configured to:

   receive, over the control terminal, a signal for driving the power transistor (102); and
   provide an output voltage over the output node ($V_{OUT}$);
   the regulator (100d) further comprising:

   an active compensation circuit (128) coupled to the control terminal of the power transistor (102) and configured to present a variable value equivalent capacitance and a variable value equivalent resistance to compensate the output voltage provided on the output node ($V_{OUT}$)
   an error amplifier (104) having a first input configured to receive a reference voltage ($V_{REF}$), a second input configured to receive the output voltage ($V_{OUT}$) and an output, wherein the error amplifier (104) is configured to compare the reference voltage ($V_{REF}$) and the output voltage ($V_{OUT}$), generate the signal for driving the power transistor (102) based on comparing the reference voltage ($V_{REF}$) and the output voltage ($V_{OUT}$) and output the signal for driving the power transistor (102),
   and wherein the active compensation circuit (128) includes
   a mirror transistor (130) having a first conduction terminal coupled to the first conduction terminal of the power transistor (102) and a control terminal coupled to the control terminal of the power transistor (102), wherein the mirror transistor (130) has a second conduction terminal,
   **characterized in that** the active compensation circuit (128) further comprises:

   a first compensation stage (132) including first and second compensation transistors (136, 138) in a current mirror configuration and a current source (140); and
   a second compensation stage (134) including third and fourth compensation transistors (142, 144) in a current mirror configuration and a compensation capacitance (146), wherein:

   the first compensation transistor (136) has a first conduction terminal and a control terminal coupled to the second conduction terminal of the mirror transistor (130) and a second conduction terminal coupled to a reference voltage (111) node,
   the second compensation transistor (138) has a control terminal coupled to the control terminal of the first compensation transistor (136) and a second conduction terminal coupled to the reference voltage (111) node, wherein the second compensation transistor (138) has a first conduction terminal,
   the current source (140) has a first terminal coupled to the first conduction terminal of the second compensation transistor (138) and a second terminal coupled to the reference voltage (111) node;
   the third compensation transistor (142) has a first conduction terminal coupled to the input node ($V_{IN}$) and a second conduction terminal and a control terminal coupled to the first conduction terminal of the second compensation transistor (138);
   the fourth compensation transistor (144) has a first conduction terminal coupled to the input node ($V_{IN}$), a control terminal coupled to the control terminal of the third compensation transistor (142) and a second conduction terminal coupled to the control terminal of the power transistor (102); and
   the compensation capacitance (146) being connected between the control terminal and the second conduction terminal of the fourth (144) compensation transistor.

2. The regulator (100d) as claimed in claim 1, wherein the variable value equivalent capacitance is a 1 + K multiple of the compensation capacitance and K is a ratio of a transconductance of the fourth compensation transistor (144) to a transconductance of the third compensation transistor (142).

3. The regulator (100d) as claimed in claim 1, wherein the operational amplifier (104), the variable value capacitance, the variable value equivalent resistance (128) and the power transistor (102) are all on the same semiconductor substrate.

4. The regulator (100d) as claimed in claim 1, wherein the current source (140) is configured to supply a first current (Icomfix), wherein the second compensation stage (134) is configured to aggregate the first current (Icomfix) to a sensed current (Isense) mirroring (130) a current flowing through the power transistor (102), the sense current being provided via said mirror transistor (130) and wherein the active compensation circuit (128) is configured to compensate the regulator (100d) based on the aggregate (Icompn) of the first current (Icomfix) and the sensed current (Isense).

5. The regulator of claim 2, wherein the variable value equivalent resistance is inversely correlated with a transconductance of the first compensation transistor (136) and the ratio of the transconductance of the first compensation transistor (136) of the active compensation circuit to the transconductance of the second compensation transistor (138) of the active compensation circuit.

**Patentansprüche**

1. Halbleiterregler (100d), umfassend:

einen Eingangsknoten ($V_{IN}$);
einen Ausgangsknoten ($V_{OUT}$);
einen Leistungstransistor (102), der einen ersten Leitungsanschluss, der mit dem Eingangsknoten ($V_{IN}$) gekoppelt ist, einen zweiten Leitungsanschluss, der mit dem Ausgangsknoten ($V_{OUT}$) gekoppelt ist, und einen Steueranschluss aufweist, wobei der Leistungstransistor (102) konfiguriert ist, um:

über den Steueranschluss ein Signal zum Ansteuern des Leistungstransistors (102) zu empfangen; und
eine Ausgangsspannung über den Ausgangsknoten ($V_{OUT}$) bereitzustellen;
wobei der Regler (100d) weiter umfasst:

eine aktive Kompensationsschaltung (128), die mit dem Steueranschluss des Leistungstransistors (102) gekoppelt ist, und konfiguriert ist, um eine Kapazität entsprechend einem variablen Wert und einen Widerstand entsprechend einem variablen Wert zu präsentieren, um die Ausgangsspannung, die am Ausgangsknoten ($V_{OUT}$) bereitgestellt wird, zu kompensieren
einen Fehlerverstärker (104), der einen ersten Eingang, der konfiguriert ist, um eine Referenzspannung ($V_{REF}$) zu empfangen, einen zweiten Eingang, der konfiguriert ist, um die Ausgangsspannung ($V_{OUT}$) zu empfangen, und einen Ausgang aufweist, wobei der Fehlerverstärker (104) konfiguriert ist, um die Referenzspannung ($V_{REF}$) und die Ausgangsspannung ($V_{OUT}$) zu vergleichen, das Signal zum Ansteuern des Leistungstransistors (102) basierend auf dem Vergleichen der Referenzspannung ($V_{REF}$) und der Ausgangsspannung ($V_{OUT}$) zu erzeugen, und das Signal zum Ansteuern des Leistungstransistors (102) auszugeben,
und wobei die aktive Kompensationsschaltung (128) beinhaltet:

einen Spiegeltransistor (130), der einen ersten Leitungsanschluss, der mit dem ersten Leitungsanschluss des Leistungstransistors (102) gekoppelt ist, und einen Steueranschluss aufweist, der mit dem Steueranschluss des Leistungstransistors (102) gekoppelt ist, wobei der Spiegeltransistor (130) einen zweiten Leitungsanschluss aufweist,
**dadurch gekennzeichnet, dass** die aktive Kompensationsschaltung (128) weiter umfasst:

eine erste Kompensationsstufe (132), die erste und zweite Kompensationstransistoren (136, 138) in einer Stromspiegelkonfiguration und eine Stromquelle (140) beinhaltet; und
eine zweite Kompensationsstufe (134), die dritte und vierte Kompensationstransistoren (142, 144) in einer Stromspiegelkonfiguration und eine Kompensationskapazität (146) beinhaltet; wobei:

der erste Kompensationstransistor (136) einen ersten Leitungsanschluss und einen Steueranschluss, der an den zweiten Leitungsanschluss des Spiegeltransistors (130) gekoppelt ist, und einen zweiten Leitungsanschluss aufweist, der an einen Referenzspannungsknoten (111) gekoppelt ist,

der zweite Kompensationstransistor (138) einen Steueranschluss, der an den Steueranschluss des ersten Kompensationstransistors (136) gekoppelt ist, und einen zweiten Leitungsanschluss aufweist, der an den Referenzspannungsknoten (111) gekoppelt ist, wobei der zweite Kompensationstransistor (138) einen ersten Leitungsanschluss aufweist, die Stromquelle (140) einen ersten Anschluss aufweist, der an den ersten Leitungsanschluss des zweiten Kompensationstransistors (138) gekoppelt ist, und einen zweiten Anschluss, der an den Referenzspannungsknoten (111) gekoppelt ist;

der dritte Kompensationstransistor (142) einen ersten Leitungsanschluss aufweist, der an den Eingangsknoten ($V_{IN}$) gekoppelt ist, und einen zweiten Leitungsanschluss und einen Steueranschluss, die an den ersten Leitungsanschluss des zweiten Kompensationstransistors (138) gekoppelt sind;

der vierte Kompensationstransistor (144) einen ersten Leitungsanschluss aufweist, der an den Eingangsknoten ($V_{IN}$) gekoppelt ist, einen Steueranschluss, der an den Steueranschluss des dritten Kompensationstransistors (142) gekoppelt ist, und einen zweiten Leitungsanschluss, der an den Steueranschluss des Leistungstransistors (102) gekoppelt ist; und

die Kompensationskapazität (146) zwischen dem Steueranschluss und dem zweiten Leitungsanschluss des vierten (144) Kompensationstransistors verbunden ist.

2. Regler (100d) nach Anspruch 1, wobei die Kapazität entsprechend einem variablen Wert ein 1+K-Vielfaches der Kompensationskapazität ist, und K ein Verhältnis einer Transkonduktanz des vierten Kompensationstransistors (144) zu einer Transkonduktanz des dritten Kompensationstransistors (142) ist.

3. Regler (100d) nach Anspruch 1, wobei der Operationsverstärker (104), die Kapazität mit variablem Wert, der Widerstand entsprechend einem variablen Wert (128) und der Leistungstransistor (102) alle am gleichen Halbleitersubstrat sind.

4. Regler (100d) nach Anspruch 1, wobei die Stromquelle (140) konfiguriert ist, um einen ersten Strom (Icomfix) zuzuführen, wobei die zweite Kompensationsstufe (134) konfiguriert ist, um den ersten Strom (Icomfix) auf einen abgetasteten Strom (Isense) zu aggregieren, der einen Strom spiegelt (130), der durch den Leistungstransistor (102) fließt, wobei der Abtaststrom über den Spiegeltransistor (130) bereitgestellt wird, und wobei die aktive Kompensationsschaltung (128) konfiguriert ist, um den Regler (100d) basierend auf dem Aggregat (Icompn) des ersten Stroms (Icomfix) und des abgetasteten Stroms (Isense) zu kompensieren.

5. Regler nach Anspruch 2, wobei der Widerstand entsprechend einem variablen Wert umgekehrt proportional zu einer Transkonduktanz des ersten Kompensationstransistors (136) und dem Verhältnis der Transkonduktanz des ersten Kompensationstransistors (136) der aktiven Kompensationsschaltung zur Transkonduktanz des zweiten Kompensationstransistors (138) der aktiven Kompensationsschaltung ist.

**Revendications**

1. Régulateur à semiconducteur (100d) comprenant :

un noeud d'entrée ($V_{IN}$) ;
un noeud de sortie ($V_{OUT}$) ;
un transistor de puissance (102) ayant une première borne de conduction couplée au noeud d'entrée ($V_{IN}$), une deuxième borne de conduction couplée au noeud de sortie ($V_{OUT}$) et une borne de commande, le transistor de puissance (102) étant configuré pour :

recevoir, sur la borne de commande, un signal destiné à piloter le transistor de puissance (102) ; et
fournir une tension de sortie sur le noeud de sortie ($V_{OUT}$) ;

le régulateur (100d) comprenant en outre :

un circuit de compensation active (128) couplé à la borne de commande du transistor de puissance (102) et configuré pour présenter une capacité équivalente à valeur variable et une résistance équivalente à valeur variable pour compenser la tension de sortie fournie sur le noeud de sortie ($V_{OUT}$) ;

un amplificateur d'erreur (104) ayant une première entrée configurée pour recevoir une tension de référence ($V_{REF}$), une deuxième entrée configurée pour recevoir la tension de sortie ($V_{OUT}$) et une sortie, l'amplificateur d'erreur (104) étant configuré pour comparer la tension de référence ($V_{REF}$) et la tension de sortie ($V_{OUT}$), produire le signal servant à piloter le transistor de puissance (102) en se basant sur la comparaison de la tension de référence ($V_{REF}$) et de la tension de sortie ($V_{OUT}$) et délivrer en sortie le signal servant à piloter le transistor de puissance (102),

et dans lequel le circuit de compensation active (128) comprend :

un transistor miroir (130) ayant une première borne de conduction couplée à la première borne de conduction du transistor de puissance (102) et une borne de commande couplée à la borne de commande du transistor de puissance (102), dans lequel le transistor miroir (130) a une deuxième borne de conduction,

**caractérisé en ce que** le circuit de compensation active (128) comprend en outre :

un premier étage de compensation (132) comprenant des premier et deuxième transistors de compensation (136, 138) en une configuration de miroir de courant et une source de courant (140) ; et

un deuxième étage de compensation (134) comprenant des troisième et quatrième transistors de compensation (142, 144) en une configuration de miroir de courant et une capacité de compensation (146), dans lequel :

le premier transistor de compensation (136) a une première borne de conduction et une borne de commande couplée à la deuxième borne de conduction du transistor miroir (130) et une deuxième borne de conduction couplée à un noeud de tension de référence (111),

le deuxième transistor de compensation (138) a une borne de commande couplée à la borne de commande du premier transistor de compensation (136) et une deuxième borne de conduction couplée au noeud de tension de référence (111), dans lequel le deuxième transistor de compensation (138) a une première borne de conduction,

la source de courant (140) a une première borne couplée à la première borne de conduction du deuxième transistor de compensation (138) et une deuxième borne couplée au noeud de tension de référence (111) ;

le troisième transistor de compensation (142) a une première borne de conduction couplée au noeud d'entrée ($V_{IN}$) et une deuxième borne de conduction et une borne de commande couplées à la première borne de conduction du deuxième transistor de compensation (138) ;

le quatrième transistor de compensation (144) a une première borne de conduction couplée au noeud d'entrée ($V_{IN}$), une borne de commande couplée à la borne de commande du troisième transistor de compensation (142) et une deuxième borne de conduction couplée à la borne de commande du transistor de puissance (102) ; et

la capacité de compensation (146) étant montée entre la borne de commande et la deuxième borne de conduction du quatrième transistor de compensation (144).

2. Régulateur (100d) selon la revendication 1, dans lequel la capacité équivalente à valeur variable est un multiple $1 + K$ de la capacité de compensation et K est le rapport d'une transconductance du quatrième transistor de compensation (144) sur une transconductance du troisième transistor de compensation (142).

3. Régulateur (100d) selon la revendication 1, dans lequel l'amplificateur opérationnel (104), la capacité à valeur variable, la résistance équivalente à valeur variable (128) et le transistor de puissance (102) sont tous sur le même substrat de semiconducteur.

4. Régulateur (100d) selon la revendication 1, dans lequel la source de courant (140) est configurée pour fournir un premier courant (Icomfix), dans lequel le deuxième étage de compensation (134) est configuré pour agréger le premier courant (Icomfix) à un courant mesuré (Isense) qui reproduit en miroir (130) un courant circulant dans le transistor de puissance (102), le courant mesuré étant fourni via ledit transistor miroir (130) et dans lequel le circuit de compensation active (128) est configuré pour compenser le régulateur (100d) en se basant sur l'agrégat (Icompn) du premier courant (Icomfix) et du courant mesuré (Isense).

5. Régulateur (100d) selon la revendication 2, dans lequel la résistance équivalente à valeur variable est inversement corrélée à une transconductance du premier transistor de compensation (136) et au rapport de la transconductance du premier transistor de compensation (136) du circuit de compensation active sur la transconductance du deuxième transistor de compensation (138) du circuit de compensation active.

FIG. 1

EP 4 083 745 B1

FIG. 2

EP 4 083 745 B1

FIG. 3

EP 4 083 745 B1

FIG. 4

EP 4 083 745 B1

FIG. 5A

EP 4 083 745 B1

FIG. 5B

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 02054167 A1
- US 2013002216 A1
- US 2021034087 A1
- US 2006012356 A1
- US 2012038332 A1